# EUROPÄISCHE PATENTSCHRIFT

(11) **EP 2 504 258 B1**
(45) Veröffentlichungstag und Bekanntmachung des Hinweises auf die Patenterteilung: **30.04.2014**
(21) Anmeldenummer: 10787344.0
(22) Anmeldetag: 23.11.2010
(51) Int. Cl.: B65G 23/08

(54) **TROMMELMOTOR MIT PROFILIERTER UMMANTELUNG**
DRUM MOTOR HAVING A PROFILED CASING
MOTEUR À TAMBOUR À ENVELOPPE PROFILÉE

(30) Priorität: 23.11.2009 DE 202009015912 U
(43) Veröffentlichungstag der Anmeldung: 03.10.2012
(73) Patentinhaber: Interroll Holding AG, 6592 Sant' Antonino (CH)
(72) Erfinder: DUDEK, Siegmund, CH-6592 S. Antonino (CH); VELLADURAI, Palani, CH-6592 S. Antonino (CH)
(74) Vertreter: Eisenführ Speiser
(86) Internationale Anmeldenummer: PCT/EP2010/067999
(87) Internationale Veröffentlichungsnummer: WO 2011/061342

(56) Entgegenhaltungen:
- DE-A1- 3 810 182
- DE-B- 1 047 115
- DE-B- 1 238 390
- DE-B1- 1 575 492
- US-A- 2 628 709
- US-A- 5 630 500
- US-A1- 2008 308 392

## Beschreibung

Die Erfindung betrifft einen Trommelmotor umfassend:
- eine Antriebseinheit, wie eine Rotor/ Stator Einheit eines Elektromotors oder eine hydraulische oder pneumatische Aktuatoreneinheit,
- eine Abtriebswelle angeschlossen an die Antriebseinheit zur Übertragung von Kraft und Moment,
- eine äußere Trommel, die zumindest teilweise die Abtriebseinheit umschließt und relativ zu einer Befestigungsachse rotierbar gelagert ist,
- eine Ummantelung, die mit der äußeren Oberfläche der rotierbaren Trommel verbunden ist und ein Profil aufweist.

Trommelmotoren der vorgenannten Bauweise werden insbesondere im Bereich des Warentransports angewendet und dienen als primäre Antriebsquelle für Förderbänder. Zu diesem Zweck weist ein Trommelmotor eine zylindrische äußere Trommeloberfläche auf, die durch einen innerhalb der Trommel gelagerten Antriebsmotor in Rotation in Bezug auf eine am Trommelmotor angeordnete Befestigungsachse gesetzt werden kann. Die Befestigungsachse verläuft typischerweise koaxial zur Rotationsachse der Trommel und kann beispielsweise durch zwei jeweils stirnseitig am Trommelmotor angeordnete Achseinheiten, die sich axial von den Stirnseiten erstrecken, gebildet werden.

Trommelmotoren kommen in unterschiedlichen Installationsumgebungen zum Einsatz, darunter logistische Anwendungen, industrielle Anwendungen und Anwendungen in Umgebungen, die erhöhte Hygienebedingungen und IP-Raten (Ingress Protection) erfordern, wie beispielsweise Anwendungen in der Lebensmittelindustrie, chemischen oder pharmazeutischen Industrie.

Insbesondere in Anwendungen mit solchen erhöhten hygienischen Anforderungen müssen Trommelmotoren in einfacher und zugleich zuverlässiger Weise gereinigt werden können.

Es ist bekannt, diese hygienischen Anforderungen mittels einer auf der Trommelmotoroberflache aufgebrachten Gummilage zu erfüllen, die aus einem entsprechend beständigen, gut zu reinigenden Gummimaterial besteht. Es ist weiterhin bekannt, zur Übertragung des Drehmoments von der Trommelmotoroberfläche auf das Förderband einen Formschluss nach Art eines Zahnriemens mit einem Zahnriemenrad bereitzustellen, indem entsprechende, sich axial erstreckende Längsnuten in die Trommelmotoroberfläche eingebracht sind und mit entsprechenden Querrippen des Förderbandes zusammenwirken. Alternativ hierzu ist es auch bekannt, eine Drehmomentübertragung mittels Zahnrädern, die an die Trommelmotoroberflache angeschweißt sind und mit entsprechenden Gegenprofilen am Förderband zusammenwirken, zu übertragen.

Aus DE 1 575 492 ist eine Band- oder Riemenscheibe mit einem Grundkörper mit glatter, zylindrischer Oberfläche vorbekannt, wobei mehrere auf dem Umfang an der Scheibe befestigte Griffleisten vorgesehen sind, die lösbar auf der Oberfläche arretiert sind. Die Griffleisten weisen diagonal verlaufende Nuten in ihrer äußeren Oberfläche auf.

An Trommelmotoren, die in hygienisch anspruchsvollen Bereichen eingesetzt werden, werden zunehmend erhöhte Anforderungen hinsichtlich der Sicherheit gegen Verschmutzungen und sich einnistende Keime oder dergleichen gestellt. Zugleich folgt aus einem erh6hten Kostendruck in Produktions- oder Nutzungsbe- reichen, welche solche Trommelmotoren verwenden, der Wunsch, den Aufwand, der für die Reinigung erforderlich ist, zu reduzieren. Schließlich besteht bereits hinsichtlich des Anschaffungspreises von Trommelmotoren ein Kostendruck, welcher sich für Hersteller von Trommelmotoren darin niederschlägt, die Fertigungskosten für die Herstellung des Trommelmotors zu reduzieren, ohne hierbei funktionelle oder qualitative Einbußen hinzunehmen.

Aus diesen unterschiedlichen Anforderungen besteht ein Bedarf für einen Trommelmotor, der in zuverlässigerer und zugleich einfacher und kostengünstig herzustellenden Weise in hygienisch anspruchsvollen Anwendungsbereichen betrieben werden kann.

Dieser Bedarf wird erfindungsgemäß mit einem Trommelmotor gemäß Anspruch 1 gelöst.

Durch die spezifische Ausgestaltung des Profils des erfindungsgemäßen Trommelmotors wird erreicht, dass die Oberfläche des Trommelmotors bei darauf aufgelegtem Förderband in einfacher Weise durch einen Flüssigkeitsstrahl gereinigt werden kann. Durch die im Profil enthaltene Schraubennut wird hierbei eine Verteilung der Flüssigkeit erreicht, die einerseits es ermöglicht, die gesamte Oberfläche der Trommel des Trommelmotors mit der Reinigungsflüssigkeit zu benetzen, zugleich aber auch die mit dem Trommelmotor im Eingriff stehende Oberfläche des Förderbandes zu benetzen. Es wird daher der im Stand der Technik bestehende Nachteil vermieden, dass Teile dieser Oberfläche nicht von der Flüssigkeit erreicht werden können, da sie aufgrund einer Abdichtungswirkung zwischen Förderband und Trommelmotoroberfläche abgesperrt sind. Zugleich wird erreicht, dass die Reinigungsflüssigkeit aus allen Bereichen der Trommeloberfläche und des Förderbands wieder in zuverlässiger Weise abfließen kann, wodurch die Bildung von keimbildenden Flüssigkeitsreservoiren verhindert wird.

Es ist zu verstehen, dass die erfindungsgemäße Wirkung grundsätzlich erreicht wird, wenn sich die Schraubennut über einen Teil der Oberfläche der Ummantelung erstreckt. Insbesondere ist es bevorzugt, wenn sich die Schraubennut über die gesamte axiale Länge der Trommel des Trommelmotors erstreckt. Hierdurch wird sichergestellt, dass die Reinigungswirkung auch über diese gesamte axiale Länge der Trommel bzw. die gesamte Breite des Förderbandes erzielt wird.

Durch die erfindungsgemäße Geometrie des Profils wird erreicht, dass eine Reinigungsflüssigkeit ein auf der Trommel abrollendes Förderband über seine gesamte Breite erreichen und aus der gesamten Breite abfließen kann.

Erfindungsgemäß ist vorgesehen, dass das Profil eine Vielzahl von parallel und in Umfangsrichtung beabstandeten Längsnuten umfasst, wodurch eine Vielzahl voneinander getrennter, gegenüber der Bodenfläche der Schraubennut und Längsnuten hervorstehende Profilanteile definiert sind. Mit dieser Fortbildung wird eine Trommeloberfläche mit einem Profil bereitgestellt, die dazu geeignet ist, um mit einem mit Längsrippen profilierten Förderband eine Drehmomentübertragung im Formschluss zu bewirken, ohne dass hierbei unerwünschte Axialkräfte auf das Förderband übertragen werden, die zum Abspringen des Förderbandes führen könnten und ohne dass hierbei die vorteilhafte Reinigungsmöglichkeit des erfindungsgemäßen Profils aufgegeben wird.

Dabei ist es insbesondere bevorzugt, wenn die Tiefe der Schraubennut verschieden, insbesondere größer als die Tiefe der Längsnuten ist. Durch diese Ausgestaltung wird eine zuverlässige Verteilung einer Reinigungsflüssigkeit über die Schraubennut auch in solchen Bereichen erreicht, die von einem Förderband mit komplementären Zahnrippen bedeckt sind, die in die entsprechenden Längsnuten eingreifen.

Noch weiter ist es bevorzugt, dass sich die Längsnuten parallel zur Rotationsachse erstrecken, um hierdurch eine axialschubfreie und zugleich kostengünstig zu fertigende Formschlussübertragung des Drehmoments zu erzielen.

Erfindungsgemäß umfassen die Längsnuten eine erste Art Längsnut, welche eine erste Breite aufweisen und eine zweite Art Längsnut, welche eine von der ersten Breite verschiedene Breite aufweisen. Diese Bauweise mit zwei unterschiedlichen Arten von Längsnuten kann dazu dienen, um mit einem Förderband zusammenzuwirken, welches komplementäre Längsrippen aufweist, die nach Geometrie und Beabstandung lediglich mit einer Art der beiden Arten von Längsnuten zusammenwirken, wodurch die Längsnuten der anderen Art auch in einem vom Förderband umschlungenen Bereich der Trommel als Leitkanäle für eine Reinigungsflüssigkeit dienen können und somit eine verbesserte axiale Verteilung der Reinigungsflüssigkeit von einer Schraubennutwindung zu einer benachbarten Schraubennutwindung bewirken können. Dabei ist zu verstehen, dass dieser Vorteil insbesondere erreicht wird, wenn sich die erste Art von Längsnut und zweite Art von Längsnut in Umfangsrichtung abwechselnd über die Oberfläche der Trommel verteilen, so dass jeweils eine Längsnut mit Formschluss zu einer Rippe des Zahnriemens von einer Längsnut ohne einen solchen Formschluss und mit folglich möglichem Flüssigkeitsdurchtritt benachbart zueinander angeordnet sind. Es ist jedoch zu verstehen, dass von der Erfindung umfasst auch andere Anordnungsweisen sein sollen, beispielsweise Anordnungen, bei denen jeweils zwei flüssigkeitsleitende Längsnuten einer Art von jeweils einer Formschluss übertragenden Längsnut der anderen Art gefolgt werden.

Noch weiter ist es bevorzugt, dass die Längsnuten der ersten Art eine Tiefe aufweisen, welche von der Tiefe der Längsnuten der zweiten Art verschieden ist. Diese Bauweise mit unterschiedlicher Tiefe der beiden Arten von Längsnuten ermöglicht selbst dann, wenn in jeder Längsnut eine Rippe des Zahnriemens eingreift, eine bessere Verteilung der Reinigungsflüssigkeit, indem zumindest in den tieferen Nuten ein Durchtritt der Reinigungsflüssigkeit ermöglicht wird. Des Weiteren ermöglicht diese Fortbildungsform, diejenigen Längsnuten, in denen kein Rippenanteil des Förderbandes zu liegen kommt, weniger tief als die anderen Längsnuten auszubilden, um hierdurch die Zerklüftung der Trommelmotoroberfläche zu reduzieren.

Noch weiter ist es bevorzugt, dass mehrere Schraubennuten zumindest über einen Teil der genannten Ummantelung aufgebracht sind und schraubenförmig um die Rotationsachse der Trommel verlaufen. Bei dieser Fortbildungsform ist anstelle einer einzelnen, gewindeförmigen Schraubennut, die in einer oder mehreren Windungen um die Trommeloberfläche läuft, eine Mehrzahl solcher Windungen nach Art eines mehrgängigen Gewindes, insbesondere eines zwei-, drei- oder viergängigen Gewindes vorgesehen, wodurch die Verteilung der Reinigungsflüssigkeit noch weiter verbessert wird. Dabei ist zu verstehen, dass die einzelnen Gewindegänge des mehrgängigen Gewindes mit einer übereinstimmenden Geometrie oder einer voneinander abweichenden Geometrie, beispielsweise unterschiedlichen Breiten oder Tiefen der Schraubennuten ausgeführt sein können. Insbesondere kann auch die Mehrzahl der Schraubennuten solcherart ausgeführt sein, dass Schraubennuten mit unterschiedlicher Steigung verwendet werden, wodurch eine vorteilhafte Vernetzung der Nuten untereinander erzielt wird und eine hierdurch noch bessere Verteilung der Reinigungsflüssigkeit über die Trommeloberfläche.

Grundsätzlich kann die erfindungsgemäße Wirkung mit einer sich um 360° erstreckenden Windung über die gesamte Länge der Trommel erzielt werden. Es ist jedoch besonders bevorzugt, wenn sich die Schraubennut in mehreren Windungen über die Trommeloberfläche erstreckt, insbesondere ist es bevorzugt, wenn die Anzahl der Windungen das 3-Fache des Länge/Durchmesser-Verhältnisses der Trommel nicht übersteigt. Mindestens 3 Windungen sollten über die Gesamtlänge der Trommel vorhanden sein.

Noch weiter ist es bevorzugt, wenn die Breite jeder Schraubennut in axialer Richtung etwa der Teilung der Schraubennuten entspricht. Hierdurch wird eine Profilgeometrie mit einerseits gutem und zuverlässigem Formschluss zur Drehmomentübertragung und andererseits einer wirksamen Flüssigkeitsverteilung für den Reinigungsprozess erreicht.

Gemäß einer weiteren bevorzugten Ausführungsform ist vorgesehen, dass die Ummantelung aus Kunststoff, insbesondere einem gummielastischen Kunststoff besteht. Die Ummantelung kann vorteilhaft durch einen Vulkanisationsprozess auf die Oberfläche der rotierbaren Trommel aufgetragen oder auf diese Oberfläche geklebt sein.

Ein weiterer Aspekt der Erfindung ist eine Trommelmotoranordnung gemäß Anspruch 10, umfassend einen Trommelmotor nach der vorher beschriebenen Bauweise und ein Förderband, welches die äußere Trommelmotoroberfläche teilweise umschlingt und auf der der Trommelmotoroberfläche zuweisenden Oberfläche komplementär zu zumindest einigen Längsnuten ausgebildete Rippen aufweist. Eine solche Trommelmotoranordnung ermöglicht eine besonders wirksame Drehmomentübertragung zwischen Trommelmotor und Förderband und zugleich eine zuverlässige und einfach durchzuführende Reinigung von sowohl der Trommelmotoroberfläche als auch des Förderbandes. Dabei kann das Förderband insbesondere so ausgebildet sein, dass es Rippen aufweist, die so beabstandet sind, dass sie nur in jede zweite, dritte oder vierte Längsnut in der Trommelmotoroberfläche eingreift.

Schließlich ist ein weiterer Aspekt der Erfindung eine Ummantelung eines Trommelmotors gemäß Anspruch 11. Eine solche Ummantelung kann dazu eingesetzt werden, um bestehende Trommelmotoren in der erfindungsgemäßen Weise durch Nachrüstung fortzubilden, indem diese Ummantelung auf die Trommelmotoroberfläche aufgebracht wird, beispielsweise durch Vulkanisation oder Verklebung, gegebenenfalls jedoch auch durch Aufschrumpfen, Verspannen oder dgl.

Die Ummantelung kann dabei fortgebildet werden, indem sie nach Art der zuvor für den Trommelmotor beschriebenen Ummantelung ausgeführt ist.

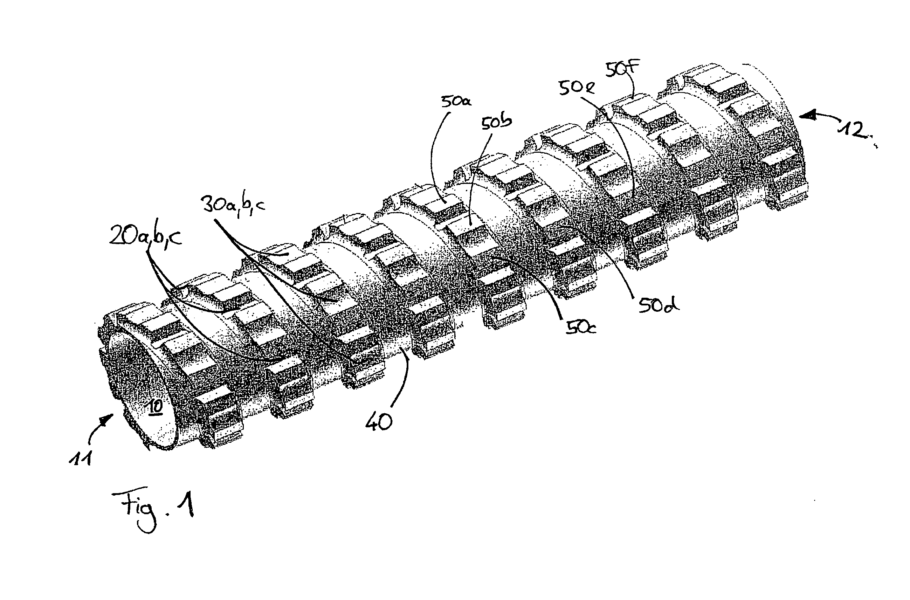

Eine bevorzugte Ausführungsform wird anhand der beiliegenden Figur beschrieben, welche eine perspektivische Ansicht einer Ummantelung eines Trommelmotors darstellt.

Wie zu erkennen ist, besteht die Ummantelung aus einer zylindrischen Grundform, welche einen inneren, zylindrischen Hohlraum 10 umschließt, in dem der Trommelmotor angeordnet ist. Dabei ist zu verstehen, dass sich aus den beiden offenen Stirnseiten 11, 12 der zylindrischen Grundform entsprechend jeweils eine Achsaufnahme erstrecken kann, um den Trommelmotor in einem Rahmengestell oder dgl. zu befestigen.

Die äußere zylindrische Oberfläche der Ummantelung weist eine Vielzahl von Längsnuten 20a, b, c ... und 30a, b, c ... auf. Die Längsnuten sind in eine erste Art 20a, b, c und eine zweite Art 30a, b, c unterteilt und in Umfangsrichtung abwechselnd zueinander angeordnet. Die erste Art von Längsnuten 20a, b, c dient dazu, um im Formschluss mit einer entsprechenden Querrippe an einem Förderband zusammenzuwirken, um ein Drehmoment von dem Trommelmotor auf das Förderband zu übertragen. Die zweite Art von Längsnut 30a, b, c steht nicht im Eingriff mit einer entsprechenden Rippe eines Förderbandes, sondern wird lediglich nach radial vom Förderband bedeckt, wodurch sie einen durchlässigen Längskanal in dem vom Förderband umschlungenen Bereich der Ummantelung bilden.

Die Ummantelung weist weiterhin eine Schraubennut 40 auf, die in Gestalt eines eingängigen Gewindes sich in einer Vielzahl von Windungen um die Oberfläche der Ummantelung windet.

Die Schraubennut 40 ist solcherart in die Ummantelung eingeschnitten, dass sie die Längsnuten 20a, b, c und 30a, b, c unterbricht und hierdurch eine Vielzahl von einzelnen Profilblöcken 50a, b, c, d, e, f ... ausbildet, welche die äußere tragende Oberfläche des Trommelmotors bilden.

Die Tiefe der Schraubennut 40 entspricht der Tiefe der Längsnuten gemäß der ersten Art. Die Tiefe der Längsnuten der zweiten Art 30a, b, c ist hingegen geringer als die Tiefe der Längsnuten der ersten Art 20a, b, c und der Schraubennut 40.

Die Breite der Schraubennut 40 entspricht etwa der Teilung des eingängigen Gewindes, also auch dessen Steigung. Die Breite der Längsnuten der zweiten Art 30a, b, c entspricht etwa der Breite der Schraubennut, wohingegen die Breite der Längsnut der ersten Art 20a, b, c geringer ist als die Breite der Längsnuten der zweiten Art 30a, b, c und der Schraubennut. Die Längsnut der zweiten Art 30a,b,c stellt insbesondere den benötigten Freiraum Gelenke an Ketten oder Transportbändern oder dergleichen bereit, erleichtert darüberhinaus aber auch das Reinigen der Trommeloberfläche, indem es für eine bessere Verteilung der Reinigungsflüssigkeit sorgt.

## Patentansprüche

1. Trommelmotor umfassend:
- eine Antriebseinheit, wie eine Rotor/ Stator Einheit eines Elektromotors oder eine hydraulische oder pneumatische Aktuatoreneinheit
- eine Abtriebswelle angeschlossen an die Antriebseinheit zur Übertragung von Kraft und Moment.
- eine äußere Trommel, die zumindest teilweise die Abtriebseinheit umschließt und relativ zu einer Befestigungsachse rotierbar gelagert ist.
- eine Ummantelung, die mit der äußeren Oberfläche der rotierbaren Trommel verbunden ist und ein Profil aufweist,
**dadurch gekennzeichnet, dass**
- das Profil eine Schraubennut (40) in der Ummantelung beinhaltet, die sich zumindest über einen Teil der Oberfläche der Ummantelung erstreckt und schraubenförmig um die Rotationsachse der rotierbaren Trommel verläuft,
- das Profil eine Vielzahl von parallel und in Umfangsrichtung beabstandeten Längsnuten (20a, b, c, 30a, b, c) umfasst, wodurch eine Vielzahl voneinander getrennter, gegenüber der Bodenfläche der Schraubennut und Längsnuten hervorstehender Profilanteile (50a-f) definiert sind, und dass
- die Längsnuten eine erste Art Längsnut (20a, b, c), welche eine erste Breite aufweisen und eine zweite Art Längsnut (30a, b, c) umfassen, welche eine von der ersten Breite verschiedene Breite aufweisen.

2. Trommelmotor gemäß Anspruch 1, **dadurch gekennzeichnet, dass** die Tiefe der Schraubennut verschieden, insbesondere größer als die Tiefe der Längsnuten ist.

3. Trommelmotor gemäß Anspruch 2, **dadurch gekennzeichnet, dass** sich die Längsnuten parallel zur Rotationsachse erstrecken.

4. Trommelmotor nach einem der vorhergehenden Ansprüche, **dadurch gekennzeichnet, dass** die Längsnuten der ersten Art eine Tiefe aufweisen, welche von der Tiefe der Längsnuten der zweiten Art verschieden ist.

5. Trommelmotor nach einem der vorhergehenden Ansprüche, **dadurch gekennzeichnet, dass** mehrere Schraubennuten zumindest über einen Teil der genannten Ummantelung aufgebracht sind und schraubenförmig um die Rotationsachse der Trommel verlaufen.

6. Trommelmotor nach einem der vorhergehenden Ansprüche, **dadurch gekennzeichnet, dass** jede Schraubennut jeweils mindestens eine sich um 360° erstreckende Windung über die Länge der Trommel aufweist.

7. Trommelmotor nach einem der vorhergehenden Ansprüche, **dadurch gekennzeichnet, dass** die Breite jeder Schraubennut in axialer Richtung etwa der Teilung der Schraubennuten entspricht.

8. Trommelmotor nach einem der vorhergehenden Ansprüche, **dadurch gekennzeichnet, dass** die Ummantelung aus Kunststoff, insbesondere einem gummielastischen Kunststoff besteht.

9. Trommelmotor nach einem der vorhergehenden Ansprüche, **dadurch gekennzeichnet, dass** die Ummantelung durch einen Vulkanisationsprozess auf die Oberfläche der rotierbaren Trommel aufgetragen ist. oder auf die äußere Oberfläche der rotierbaren Trommel geklebt ist.

10. Trommelmotoranordnung, umfassend,- einen Trommelmotor nach einem der vorhergehenden Ansprüche 2-9 und,- ein Förderband, welches die äußere Trommelmotoroberfläche teilweise umschlingt und auf der der Trommelmotoroberfläche zuweisenden Oberfläche komplementär zu den Längsnuten ausgebildete Rippen aufweist.

11. Ummantelung eines Trommelmotors; **dadurch gekennzeichnet, dass** die Ummantelung auf ihrer äußeren Oberfläche ein Profil aufweist, die eine Schraubennut beinhaltet, die schraubenförmig um die Rotationsachse der rotierbaren Trommel eines Trommelmotors verläuft und dass
- das Profil eine Vielzahl von parallel und in Umfangsrichtung beabstandeten Längsnuten (20a, b, c, 30a, b, c) umfasst, wodurch eine Vielzahl voneinander getrennter, gegenüber der Bodenfläche der Schraubennut und Längsnuten hervorstehender Profilanteile (50a-f) definiert sind, und dass
- die Längsnuten eine erste Art Längsnut (20a, b, c), welche eine erste Breite aufweisen und eine zweite Art Längsnut (30a, b, c) umfassen, welche eine von der ersten Breite verschiedene Breite aufweisen.

## Claims

1. Drum motor comprising:
- a drive unit, such as rotor/stator unit of an electric motor or a hydraulic or pneumatic actuator unit;
- an output shaft connected to the drive unit for transmitting force and torque;
- an outer drum, which surrounds the output unit at least partially and is rotatably mounted relative to a fastening axis;
- a casing, which is connected to the outer surface of the rotatable drum and has a profile,
**characterised in that**
- the profile contains a helical groove (40) in the casing that extends over at least part of the surface of the casing and runs helically about the rotational axis of the rotatable drum;
- the profile comprises a number of longitudinal parallel grooves (20a, b, c, 30a, b, c) spaced in the circumferential direction, meaning that a plurality of profile sections (50a-f) separated from one another and protruding from the floor area of the helical groove and the longitudinal grooves are defined and that
- the longitudinal grooves comprise a first kind of longitudinal groove (20a, b, c), having a first width and a second kind of longitudinal groove (30a, b c), having a width that differs from the first width.

2. Drum motor according to claim 2, **characterised in that** the depth of the helical groove is different, in particular greater, than the depth of the longitudinal grooves.

3. Drum motor according to claim 2, **characterised in that** the longitudinal grooves extend parallel to the rotational axis.

4. Drum motor according one of the above claims, **characterised in that** the longitudinal grooves of the first kind have a depth that differs from the depth of the longitudinal grooves of the second kind.

5. Drum motor according to one of the above claims, **characterised in that** several helical grooves are applied over part of the said casing and run helically about the rotational axis of the drum.

6. Drum motor according to one of the above claims, **characterised in that** each helical groove in each case has at least one turn extending through 360° over the length of the drum.

7. Drum motor according to one of the above claims, **characterised in that** the width of each helical groove in the axial direction corresponds approximately to the pitch of the helical grooves.

8. Drum motor according to one of the above claims, **characterised in that** the casing comprises plastic, in particular a rubber-elastic plastic.

9. Drum motor according to one of the above claims, **characterised in that** the casing is applied to the surface of the rotatable drum by a vulcanisation process or is bonded to the surface of the rotatable drum.

10. Drum motor arrangement, comprising
a drum motor according to one of the above claims 2-9, and
a conveyor belt, which partially surrounds the outer drum motor surface and on the surface turned towards the drum motor surface has ribs formed that are complementary to the longitudinal grooves.

11. Casing of a drum motor, **characterised in that** the casing on its outer surface has a profile, containing a helical groove, running helically about the rotational axis of the rotatable drum of a drum motor, and **in that**
- the profile comprises a plurality of longitudinal parallel grooves (20a, b, c, 30a, b, c) spaced in the circumferential direction, meaning that a plurality of profile sections (50a-f) separated from one another and protruding from the floor area of the helical groove and the longitudinal grooves are defined, and **in that**
- the longitudinal grooves comprise a first kind of longitudinal groove (20a, b, c) having a first width and a second kind of longitudinal groove (30a, b, c), having a width that differs from the first width.

## Revendications

1. Moteur à tambour comprenant :
- une unité d'entraînement telle qu'une unité rotor/stator d'un moteur électrique ou une unité d'actionnement hydraulique ou pneumatique
- un arbre de sortie raccordé à l'unité d'entraînement pour la transmission de force et de couple
- un tambour extérieur qui entoure au moins en partie l'unité de sortie et est agencé de manière à pouvoir tourner par rapport à un axe de fixation
- une enveloppe qui est reliée à la surface extérieure du tambour rotatif et présente un profil,
**caractérisé en ce que**
- le profil contient une cannelure hélicoïdale (40) dans l'enveloppe qui s'étend au moins sur une partie de la surface de l'enveloppe et s'étend en forme d'hélice autour de l'axe de rotation du tambour rotatif,
- le profil comporte une pluralité de rainures longitudinales (20a, b, c, 30a, b, c) parallèles et espacées dans la direction circonférentielle, par quoi une pluralité de portions de profil (50a-f) séparées les unes des autres et faisant saillie par rapport à la surface de fond de la cannelure hélicoïdale et des rainures longitudinales est définie et **en ce que**
- les rainures longitudinales comportent un premier type de rainure longitudinale (20a, b, c) qui présente une première largeur, et un second type de rainure longitudinale (30a, b, c) qui présente une largeur différente de la première largeur.

2. Moteur à tambour selon la revendication 1, **caractérisé en ce que** la profondeur de la cannelure hélicoïdale est différente, en particulier plus grande que la profondeur des rainures longitudinales.

3. Moteur à tambour selon la revendication 2, **caractérisé en ce que** les rainures longitudinales s'étendent parallèlement à l'axe de rotation.

4. Moteur à tambour selon l'une quelconque des revendications précédentes, **caractérisé en ce que** les rainures longitudinales du premier type présentent une profondeur qui est différente de la profondeur des rainures longitudinales du second type.

5. Moteur à tambour selon l'une quelconque des revendications précédentes, **caractérisé en ce que** plusieurs cannelures hélicoïdales sont réalisées au moins sur une partie de ladite enveloppe et s'étendent en forme d'hélice autour de l'axe de rotation du tambour.

6. Moteur à tambour selon l'une quelconque des revendications précédentes, **caractérisé en ce que** chaque cannelure hélicoïdale présente respectivement au moins une spire s'étendant à 360° sur la longueur du tambour.

7. Moteur à tambour selon l'une quelconque des revendications précédentes, **caractérisé en ce que** la largeur de chaque cannelure hélicoïdale dans la direction axials correspond à peu près au pas des cannelures hélicoïdales.

8. Moteur à tambour selon l'une quelconque des revendications précédentes, **caractérisé en ce que** l'enveloppe se compose de plastique, en particulier d'un plastique élastique et caoutchouteux.

9. Moteur à tambour selon l'une quelconque des revendications précédentes, **caractérisé en ce que** l'enveloppe est rapportée par un processus de vulcanisation sur la surface du tambour rotatif ou est collée sur la surface extérieure du tambour rotatif.

10. Ensemble de moteur à tambour comprenant un moteur à tambour selon l'une quelconque des revendications précédentes 2 à 9 et une bande de transport qui enlace en partie la surface du moteur à tambour extérieure et présente, sur la surface tournée vers la surface du moteur à tambour, des nervures réalisées de manière complémentaire aux rainures longitudinales.

11. Enveloppe d'un moteur à tambour, **caractérisée en ce que** l'enveloppe sur sa surface extérieure présente un profil qui contient une cannelure hélicoïdale qui s'étend en forme d'hélice autour de l'axe de rotation du tambour rotatif d'un moteur à tambour et **en ce que**
- le profil comporte une pluralité de rainures longitudinales (20a, b, c, 30a, b, c) parallèles et espacées dans la direction circonférentielle, par quoi une pluralité de portions de profil (50a-f) séparées les unes des autres, faisant saillie par rapport à la surface de fond de la cannelure hélicoïdale et des rainures longitudinales est définie, et **en ce que**
- les rainures longitudinales comportent un premier type de rainure longitudinale (20a, b, c) qui présente une première largeur, et un second type de rainure longitudinale (30a, b, c) qui présente une largeur différente de la première largeur.
